# EUROPEAN PATENT SPECIFICATION

(11) **EP 3 889 014 B1**
(45) Date of publication and mention of the grant of the patent: **10.05.2023**
(21) Application number: 21159917.0
(22) Date of filing: 01.03.2021
(51) Int. Cl.: B62J 17/00, B62J 25/04

(54) **STRADDLED VEHICLE**
GRÄTSCHSITZFAHRZEUG
VÉHICULE À ENFOURCHER

(30) Priority: 31.03.2020 JP 2020064743
(43) Date of publication of application: 06.10.2021
(73) Proprietor: Yamaha Hatsudoki Kabushiki Kaisha, Iwata-shi, Shizuoka 438-8501 (JP)
(72) Inventor: KULASATHIENPONG, Sorawit, 10540 Samutprakarn (TH); HONGPONG, Nantakorn, 10540 Samutprakarn (TH); YAMAUCHI, Yoshinori, 10540 Samutprakarn (TH)
(74) Representative: Grünecker Patent- und Rechtsanwälte PartG mbB

(56) References cited:
- JP-A- H10 203 456
- JP-A- H10 203 458
- US-A1- 2013 249 238

## Description

The present invention relates to a straddled vehicle.

There is a type of straddled vehicle including a leg shield, a front center cover, and a front side cover (see, for example, Japanese Patent Publication No. 5990114). The leg shield is located in front of the rider's legs. The front center cover is located in front of the head pipe. The front side cover is connected to the front center cover. The front side cover extends rearward and downward from the front center cover and is connected to the leg shield.

For example, document JP H10 203456 A discloses an straddled vehicle comprising: a head pipe; a steering device turnably supported by the head pipe; a front wheel rotatably supported by the steering device; a front center cover arranged in front of the head pipe with regard to a vehicle front-rear direction and above the front wheel with regard to a vehicle vertical direction, and on at least one of a left side and a right side of the vehicle comprises a front side cover that is connected to the front center cover and overlaps with the steering device as seen in a vehicle side view; a seat arranged behind the head pipe with regard to the vehicle front-rear direction; a rear side cover arranged rearward of the front side cover and that extends forward with regard to the vehicle front-rear direction and from below the seat with regard to the vehicle vertical direction; a leg shield that extends laterally outward with regard to a vehicle width direction from the rear side cover; and a footrest surface connected to a lower portion with regard to the vehicle vertical direction of the rear side cover and arranged behind the leg shield with regard to the vehicle front-rear direction and a step, the front side cover includes an inner cover and an outer cover with regard to the vehicle width direction, and a guide groove, the guide groove extends rearward with regard to the vehicle front-rear direction and downward with regard to the vehicle vertical direction and is connected to the step, and the guide groove closes between the outer cover and the inner cover.

The rider's legs are protected by a leg shield. However, in rainy weather, water may flow backward along the front side cover, go around to the inside of the leg shield, and wet the rider's legs. It is an object of the present invention to provide a straddled vehicle that can prevent the rider's legs from getting wet. According to the present invention said object is solved by a straddled vehicle having the features of independent claim 1. Preferred embodiments are laid down in the dependent claims.

A straddled vehicle according to one aspect of the present teaching includes a head pipe, a steering device, a front wheel, a front center cover, a front side cover, a seat, a (rear) side cover, a leg shield, and a footrest surface. The steering device is turnably supported by the head pipe. The front wheel are rotatably supported by the steering device. The front center cover is arranged in front of the head pipe and above the front wheel. The front side cover is connected to the front center cover and overlaps the steering device as seen in a vehicle side view. The seat is located behind the head pipe. The side cover extends forward from below the seat. The leg shield extends laterally outward from the side cover. The footrest surface is connected to a bottom of the side cover and is arranged behind the leg shield.

The leg shield includes an upper side edge, a lower side edge, and a step. The lower side edge is located below the upper side edge and laterally outward of the upper side edge. The step is located between the upper side edge and the lower side edge. The front side cover includes an inner cover, an outer cover, and a guide groove. The inner cover is connected to the upper side edge and extends forward from the upper side edge. The outer cover extends downward and rearward from the front center cover as seen in the vehicle side view, and is arranged laterally outward of the inner cover. The outer cover includes a lower rear edge and an upper rear edge. The lower rear edge is connected to the lower side edge. The upper rear edge is located above the lower rear edge and at least partially overlaps the inner cover as seen in the vehicle side view. The guide groove is connected to the step and extends rearward and downward. The guide groove closes between the outer cover and the inner cover.

In the straddled vehicle according to the present aspect, water flows rearward along the outer cover and flows from the outer cover to the inner cover. The water that has flowed into the inner cover is guided downward by the guide groove. As a result, it is possible to prevent the rider's legs from getting wet.

The upper rear edge may have a shape that is recessed forward. In this case, water can be easily collected from the upper rear edge into the guide groove. A portion of the inner cover may be located rearward of the upper rear edge. In this case, water can be easily collected in the guide groove.

The guide groove may close between the outer cover and the inner cover at a position forward of the upper rear edge. In this case, water guided by the guide groove is not easily affected by the running wind. As seen in the vehicle side view, the outer cover may overlap the entire guide groove. In this case, water guided by the guide groove is not easily affected by the running wind.

The side cover may have a shape that is recessed laterally inward at a position behind the guide groove. In this case, the rider can place his / her foot inside the guide groove. Therefore, the rider's legs are less likely to get wet.

An upper end of the guide groove may be located above a lower end of the seat. A lower end of the guide groove may be located below the lower end of the seat. In this case, since the guide groove is provided in a wide range in a vertical direction of the vehicle, water can be easily collected in the guide groove.

The lower end of the guide groove may be located below a top of the front wheel. In this case, the water splashing from the front wheel can be easily collected in the guide groove.

The outer cover may include an upper side surface and an intermediate side surface. The upper side surface may be located above the upper end of the guide groove. The intermediate side surface may be located below the upper end of the guide groove and above the lower end of the guide groove. As seen in a vehicle front view, the intermediate side surface may be located laterally outward of the upper side surface. In this case, the rider's legs are less likely to get wet.

The outer cover may further include a lower side surface. The outer cover may be located below the lower end of the guide groove. As seen in the vehicle front view, the intermediate side surface may be located laterally outward of the lower side surface. In this case, the rider's legs are less likely to get wet.

### BRIEF DESCRIPTION OF THE DRAWING

FIG. 1 is a side view of a straddled vehicle according to an embodiment.
FIG. 2 is a perspective view of the straddled vehicle.
FIG. 3 is a top view of the straddled vehicle.
FIG. 4 is an enlarged side view of a front portion of the straddled vehicle.
FIG. 5 is a perspective view of the front portion of the straddled vehicle.
FIG. 6 is an enlarged side view of the front portion of the straddled vehicle with a left front side cover removed.
FIG. 7 is a diagram showing a state in which an inner cover is attached to a left leg shield.
FIG. 8 is a diagram showing a state in which the inner cover and a guide groove are attached to the left leg shield.
FIG. 9 is a sectional view taken along line IX-IX in FIG. 4.
FIG. 10 is a front view of a front center cover and the left and right front side covers.
FIG. 11 is a cross-sectional view taken along the line XI-XI in FIG. 4.

### DESCRIPTION OF EMBODIMENT

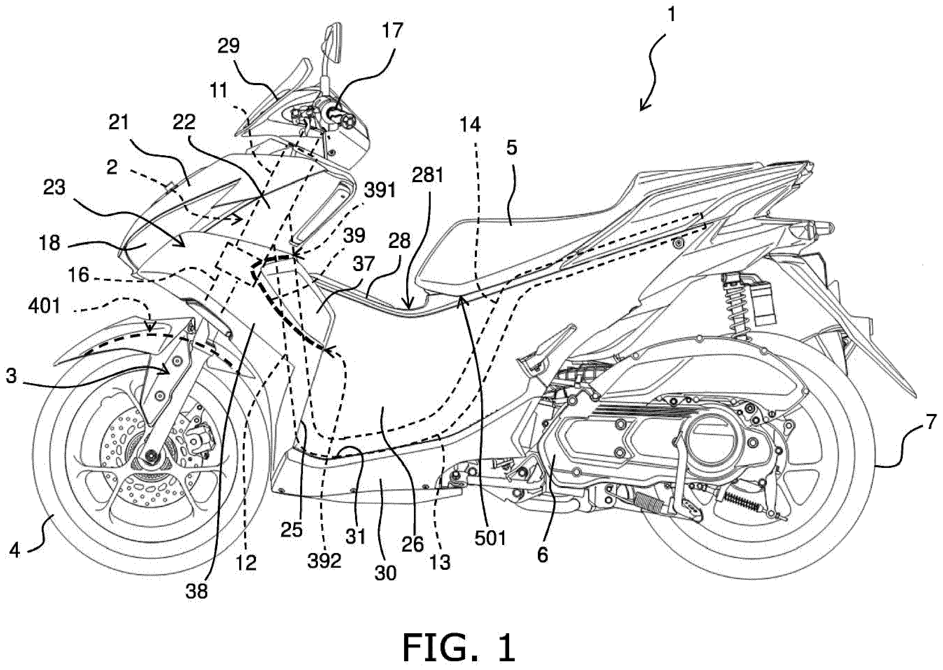

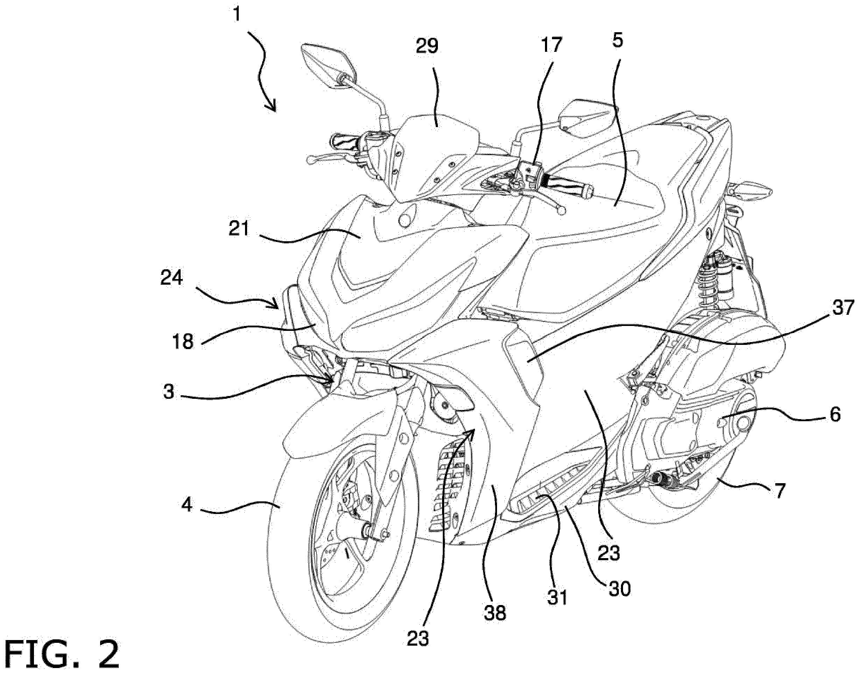

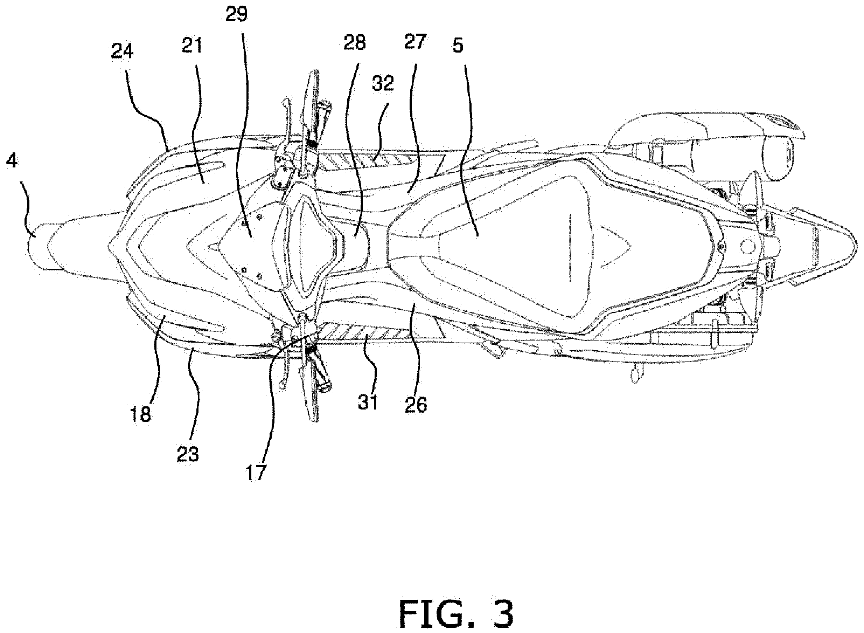

Hereinafter, a straddled vehicle according to an embodiment of the present teaching will be described with reference to the drawings. FIG. 1 is a side view of the straddled vehicle 1 according to the embodiment. FIG. 2 is a perspective view of the straddled vehicle 1. FIG. 3 is a top view of the straddled vehicle 1. The straddled vehicle 1 according to the present embodiment is a scooter. As illustrated in FIG. 1, the straddled vehicle 1 includes a body frame 2, a steering device 3, a front wheel 4, a seat 5, a power unit 6, and a rear wheel 7. In the following description, the front-rear, left-right directions are defined as the directions when viewed from the rider seated on the seat 5.

The body frame 2 includes a head pipe 11, a down frame 12, a lower frame 13, and a rear frame 14. The head pipe 11 is arranged at a center of the vehicle in a vehicle width direction. The head pipe 11 extends forward and downward. The down frame 12 extends downward from the head pipe 11. The lower frame 13 extends rearward from a lower portion of the down frame 12. The rear frame 14 extends rearward and upward from a rear portion of the down frame 12.

The steering device 3 is turnably supported by the head pipe 11. The steering device 3 rotatably supports the front wheel 4. The steering device 3 includes a front fork 16 and a handle member 17. The front fork 16 is turnably supported by the head pipe 11. The front wheel 4 is rotatably supported by the front fork 16. The handle member 17 can be operated by a rider to turn the front wheel 4.

The seat 5 is arranged behind the head pipe 11. The seat 5 is arranged above the rear frame 14. The power unit 6 is arranged below the seat 5. The power unit 6 includes, for example, an internal combustion engine. Alternatively, the power unit 6 may include an electric motor. The rear wheel 7 is rotatably supported by the power unit 6.

The straddled vehicle 1 includes a front center cover 21, a front back cover 22, a left front side cover 23, and a right front side cover 24. The front center cover 21 is arranged in front of the head pipe 11 and above the front wheel 4. A headlight 18 is arranged on the front center cover 21. The front back cover 22 is arranged behind the head pipe 11. The front back cover 22 is connected to the front center cover 21.

The left front side cover 23 is connected to the front center cover 21 and the front back cover 22. The left front side cover 23 is arranged behind the front wheel 4 and on the left side of the front wheel 4. The left front side cover 23 overlaps with the steering device 3 as seen in the vehicle side view. The right front side cover 24 is connected to the front center cover 21 and the front back cover 22. The right front side cover 24 is arranged behind the front wheel 4 and on the right side of the front wheel 4. The right front side cover 24 overlaps the steering device 3 as seen in the vehicle side view.

The straddled vehicle 1 includes a left leg shield 25, a right leg shield (not illustrated), a left (rear) side cover 26, a right (rear) side cover 27, a center cover 28, a handle cover 29, and an undercover 30. The left leg shield 25 extends to the left from the left side cover 26. The right leg shield extends to the right from the right side cover 27. The right leg shield has a similar structure except that it is symmetrical with the left leg shield 25.

The left side cover 26 and the right side cover 27 extend forward from below the seat 5. The left side cover 26 and the right side cover 27 are arranged rearward of the left front side cover 23 and the right front side cover 24, respectively. The left side cover 26 is arranged below the seat 5 and between the seat 5 and the left leg shield 25. The left side cover 26 covers the rear frame 14 from the left side. The right side cover 27 is arranged below the seat 5 and between the seat 5 and the right leg shield. The right side cover 27 covers the rear frame 14 from the right side. The center cover 28 is arranged between the seat 5 and the front back cover 22. The center cover 28 is arranged in the center of the vehicle in the vehicle width direction. The center cover 28 is connected to the left side cover 26, the right side cover 27, and the front back cover 22.

The handle cover 29 covers a portion of the handle member 17. The handle cover 29 is located above the front center cover 21. The handle cover 29 is located above the head pipe 11. The handle cover 29, together with the handle member 17, is rotatable with respect to the front center cover 21.

The undercover 30 is arranged below the left side cover 26 and the right side cover 27. The undercover 30 includes a left footrest surface 31 and a right footrest surface 32. The left footrest surface 31 and the right footrest surface 32 are portions on which the rider rests his / her feet. The left footrest surface 31 is arranged on the left side of the left side cover 26. The left footrest surface 31 is arranged behind the left leg shield 25. The left footrest surface 31 is connected to a lower portion of the left side cover 26. The left footrest surface 31 projects to the left from the lower portion of the left side cover 26. The left footrest surface 31 extends in the front-rear direction of the vehicle. The front end of the left footrest surface 31 is connected to a lower portion of the left leg shield 25. The right footrest surface 32 has a structure symmetrical to that of the left footrest surface 31. Therefore, detailed description of the right footrest surface 32 will be omitted.

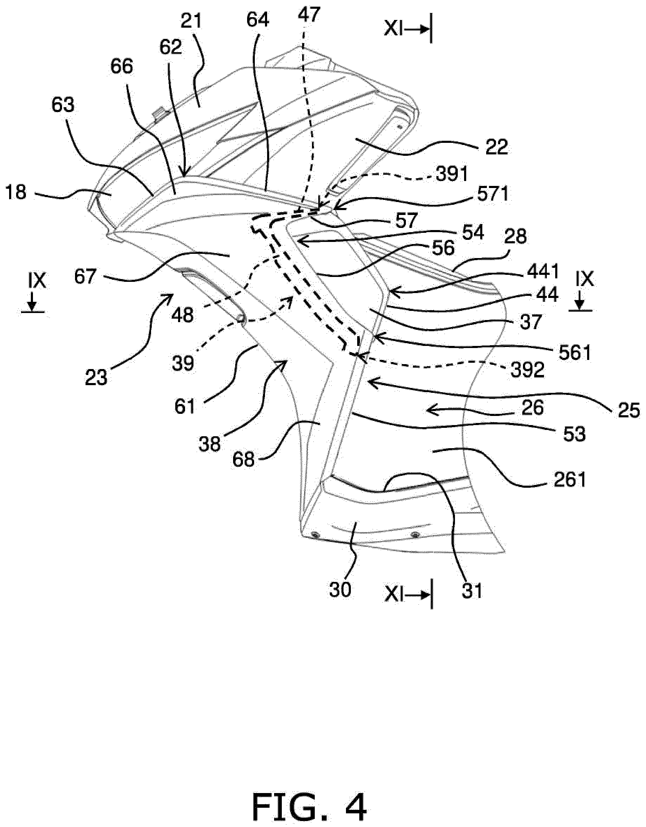

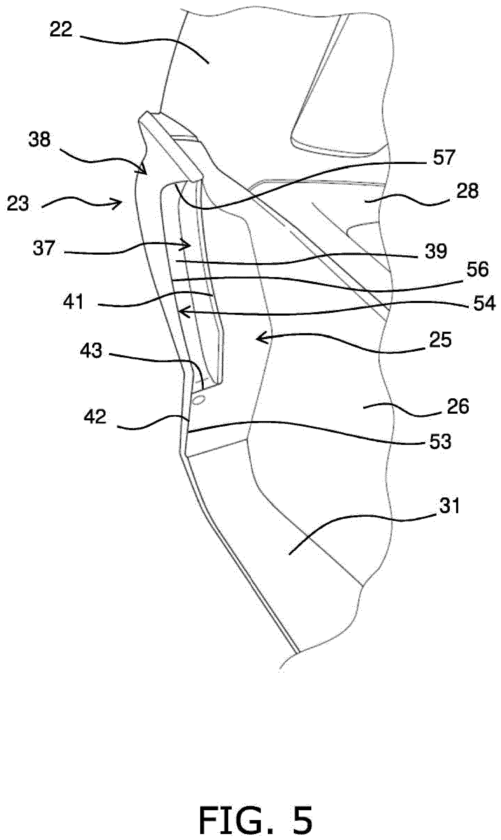

FIG. 4 is an enlarged side view of a front portion of the straddled vehicle 1. FIG. 5 is a perspective view of the front portion of the straddled vehicle 1. As illustrated in FIGS. 4 and 5, the left front side cover 23 includes an inner cover 37, an outer cover 38, and a guide groove 39. The inner cover 37 is connected to the left leg shield 25. The inner cover 37 extends forward from the left leg shield 25. The outer cover 38 extends downward and rearward from the front center cover 21 as seen in the vehicle side view. As seen in the vehicle side view, the outer cover 38 extends from the front center cover 21 to the undercover 30. The outer cover 38 is arranged laterally outward of the inner cover 37.

As seen in the vehicle side view, the guide groove 39 extends rearward and downward. The guide groove 39 is arranged between the outer cover 38 and the inner cover 37. The guide groove 39 closes an entire area between the outer cover 38 and the inner cover 37. As illustrated in FIG. 1, an upper end 391 of the guide groove 39 is located above a lower end 501 of the seat 5. A lower end 392 of the guide groove 39 is located below the lower end 501 of the seat 5.

The upper end 391 of the guide groove 39 is located above a top 401 of the front wheel 4. The lower end 392 of the guide groove 39 is located below the top 401 of the front wheel 4. The upper end 391 of the guide groove 39 is located above a lower end 281 of the center cover 28. The lower end 392 of the guide groove 39 is located below the lower end 281 of the center cover 28.

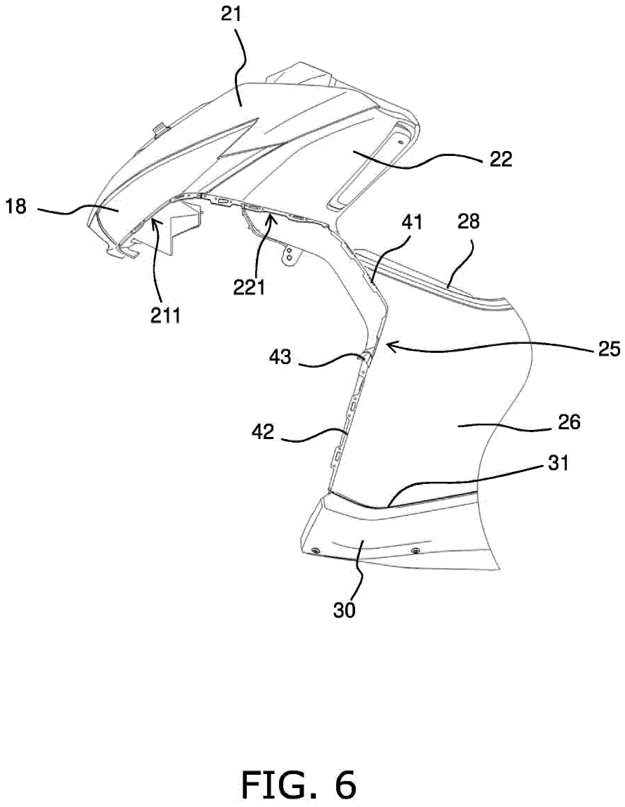

FIG. 6 is an enlarged side view of the front portion of the straddled vehicle 1 with the left front side cover 23 removed. As illustrated in FIGS. 5 and 6, the left leg shield 25 includes an upper side edge 41, a lower side edge 42, and a step 43. The upper side edge 41 extends in the vertical direction of the vehicle. As seen in the vehicle side view, the upper side edge 41 has a shape that is convexly bent rearward. The upper side edge 41 is connected to the lower edge 221 of the front back cover 22.

The lower side edge 42 is located below the upper side edge 41. The lower side edge 42 is located laterally outward of the upper side edge 41. The lower side edge 42 extends in the vertical direction of the vehicle. The upper side edge 41 extends from the step 43 to the left footrest surface 31. As seen in the vehicle side view, the lower side edge 42 is inclined forward and downward. The step 43 is located between the upper side edge 41 and the lower side edge 42. The step 43 extends in the vehicle width direction. The step 43 is provided between a lower end of the upper side edge 41 and an upper end of the lower side edge 42.

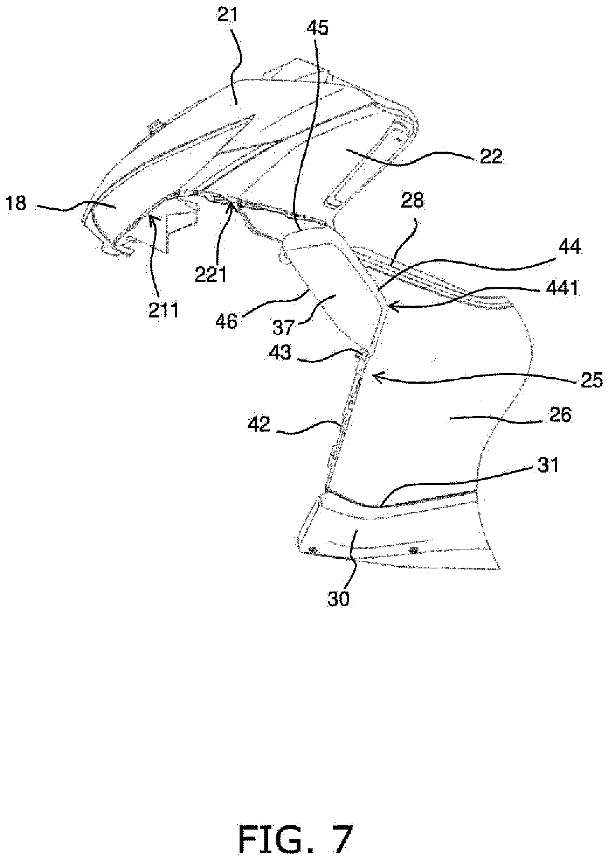

The inner cover 37 is connected to the upper side edge 41 of the left leg shield 25. The inner cover 37 extends forward from the upper side edge 41. FIG. 7 is a diagram showing a state in which the inner cover 37 is attached to the left leg shield 25. As illustrated in FIG. 7, the inner cover 37 includes a rear edge 44, an upper edge 45, and a front edge 46. The rear edge 44 of the inner cover 37 has a shape that is convexly bent rearward. As seen in the vehicle side view, the rear edge 44 is connected to the lower side edge 42 of the left leg shield 25. As seen in the vehicle side view, an upper portion of the inner cover 37 is connected to the lower edge 221 of the front back cover 22. As seen in the vehicle side view, the rear edge 44 of the inner cover 37 has a shape corresponding to the upper side edge 41 of the left leg shield 25. The rear edge 44 of the inner cover 37 is connected to the upper side edge 41 of the left leg shield 25.

As seen in the vehicle side view, the upper edge 45 of the inner cover 37 is inclined forward and downward. The upper edge 45 of the inner cover 37 is located below the lower edge 221 of the front back cover 22. As seen in the vehicle side view, the front edge 46 of the inner cover 37 is inclined forward and upward.

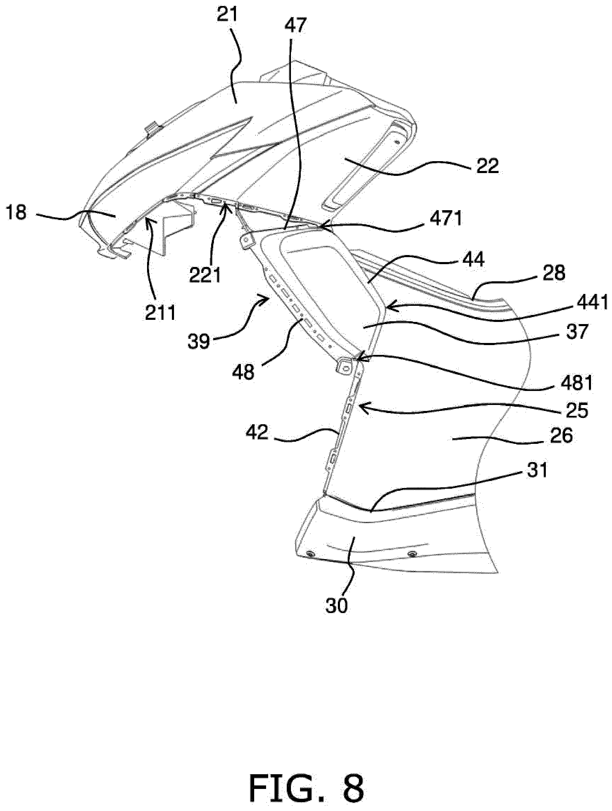

FIG. 8 is a diagram showing a state in which the inner cover 37 and the guide groove 39 are attached to the left leg shield 25. As illustrated in FIG. 8, the guide groove 39 is arranged in front of the inner cover 37. The guide groove 39 includes an upper guide portion 47 and a guide body 48. The guide groove 39 has a bent shape between the upper guide portion 47 and the guide body 48. The upper guide portion 47 is arranged above the guide body 48. As seen in the vehicle side view, the upper guide portion 47 is inclined forward and downward. The upper guide portion 47 has a shape corresponding to the upper edge 45 of the inner cover 37. The upper guide portion 47 is connected to the upper edge 45 of the inner cover 37.

The guide body 48 is inclined rearward and downward. The guide body 48 has a shape corresponding to the front edge 46 of the inner cover 37. The guide body 48 is connected to the front edge 46 of the inner cover 37. The guide body 48 is longer than the upper guide portion 47 in the vertical direction of the vehicle. A rear end 481 of the guide body 48 is located rearward of a rear end 471 of the upper guide portion 47. A rear end 441 of the rear edge 44 of the inner cover 37 is located rearward of the rear end 481 of the guide body 48. The rear end 441 of the rear edge 44 of the inner cover 37 is located rearward of the rear end 471 of the upper guide portion 47.

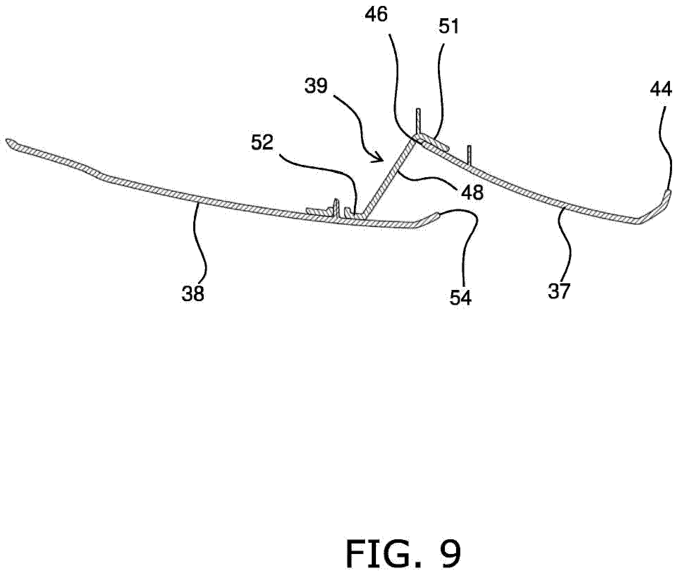

FIG. 9 is a sectional view taken along line IX-IX in FIG. 4. As illustrated in FIG. 9, the guide groove 39 includes an inner side edge 51 and an outer side edge 52. The inner side edge 51 of the guide groove 39 has a shape that is bent rearward. The inner side edge 51 of the guide groove 39 is connected to an inner surface of the inner cover 37. The outer side edge 52 of the guide groove 39 has a shape that is bent forward. The outer side edge 52 of the guide groove 39 is connected to an inner surface of the outer cover 38.

The outer cover 38 is arranged laterally outward of the guide groove 39. As illustrated in FIG. 4, the outer cover 38 overlaps with the guide groove 39 as seen in the vehicle side view. As seen in the vehicle side view, the outer cover 38 overlaps with the entire guide groove 39. As seen in the vehicle side view, the outer cover 38 overlaps with a portion of the inner cover 37. As seen in the vehicle side view, the outer cover 38 overlaps with the front edge 46 of the inner cover 37. As seen in the vehicle side view, the outer cover 38 overlaps with the upper edge 45 of the inner cover 37.

The outer cover 38 includes a lower rear edge 53 and an upper rear edge 54. The lower rear edge 53 is connected to the lower side edge 42 of the left leg shield 25. As seen in the vehicle side view, the lower rear edge 53 is inclined forward and downward. The upper rear edge 54 is located above the lower rear edge 53. The upper rear edge 54 at least partially overlaps with the inner cover 37 as seen in the vehicle side view. The upper rear edge 54 has a shape that is recessed forward. The upper rear edge 54 overlaps with the inner cover 37 as seen in the vehicle side view. A portion of the inner cover 37 is located rearward of the upper rear edge 54. A portion of the inner cover 37 is visible as seen in the vehicle side view. The guide groove 39 is arranged in front of the upper rear edge 54 at a distance from the upper rear edge 54. The guide groove 39 closes between the outer cover 38 and the inner cover 37 at a position forward of the upper rear edge 54.

The upper rear edge 54 includes a first edge 56 and a second edge 57. The first edge 56 extends obliquely forward and upward from an upper end of the lower rear edge 53. The second edge 57 is located above the first edge 56. The second edge 57 extends obliquely rearward and upward from an upper end of the first edge 56. A rear end 571 of the second edge 57 is located forward of a rear end 561 of the first edge 56. The rear end 441 of the rear edge 44 of the inner cover 37 is located rearward of the rear end 571 of the second edge 57. The rear end 441 of the rear edge 44 of the inner cover 37 is located rearward of the rear end 561 of the first edge 56.

The outer cover 38 includes a front edge 61 and an upper edge 62. As seen in the vehicle side view, the front edge 61 of the outer cover 38 has a curved shape so as to bulge rearward. The front wheel 4 is arranged in front of the front edge 61 of the outer cover 38. The upper edge 62 of the outer cover 38 has a shape that is convexly bent upward. The upper edge 62 of the outer cover 38 is connected to the lower edge 211 of the front center cover 21. The upper edge 62 of the outer cover 38 is connected to the lower edge 221 of the front back cover 22.

The upper edge 62 of the outer cover 38 includes a front upper edge 63 and a rear upper edge 64. As seen in the vehicle side view, the front upper edge 63 is inclined rearward and upward. The front upper edge 63 is arranged laterally outward of the headlight 18. As seen in the vehicle side view, the front upper edge 63 overlaps with a portion of the headlight 18. The rear upper edge 64 is located behind the front upper edge 63. The rear upper edge 64 is inclined rearward and downward. As seen in the vehicle side view, the rear upper edge 64 is connected to the rear edge 44 of the inner cover 37.

The outer cover 38 includes an upper side surface 66, an intermediate side surface 67, and a lower side surface 68. The upper side surface 66 is located above the upper end 391 of the guide groove 39. The intermediate side surface 67 is located below the upper end 391 of the guide groove 39. The intermediate side surface 67 is located above the lower end 392 of the guide groove 39. The lower side surface 68 is located below the lower end 392 of the guide groove 39.

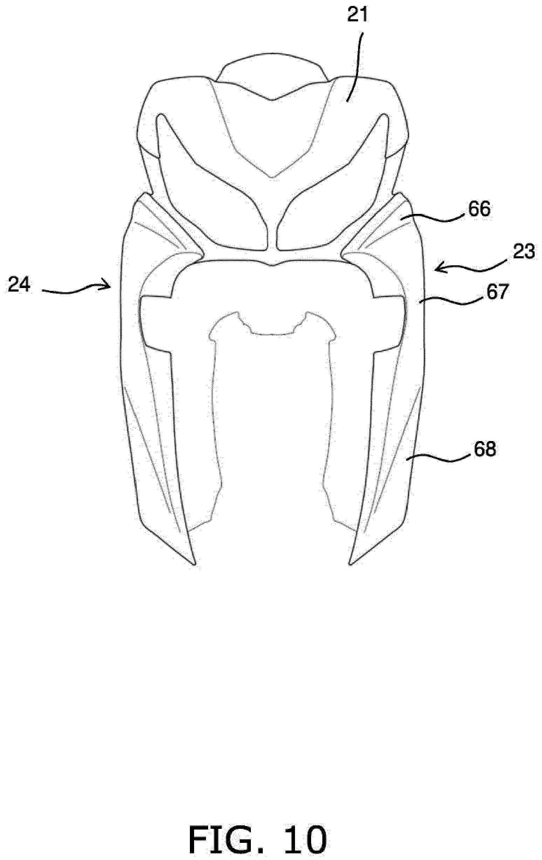

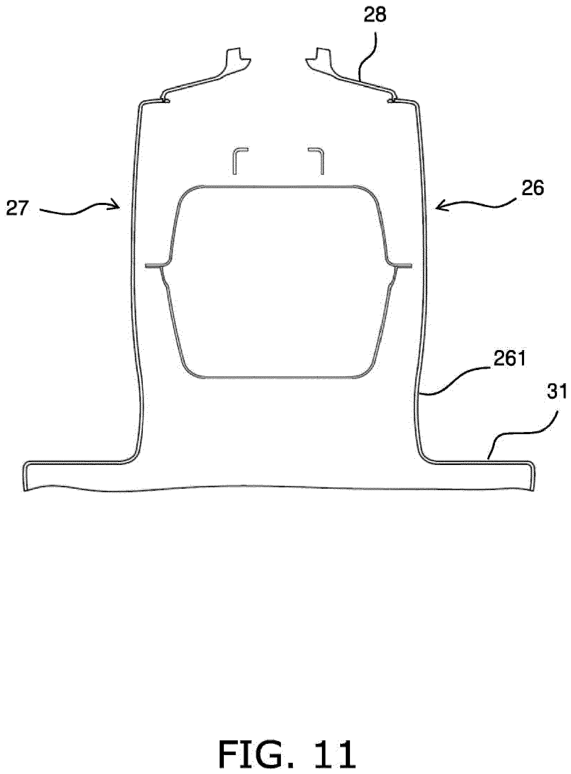

FIG. 10 is a front view of the front center cover 21 and the left and right front side covers 23 and 24. As illustrated in FIG. 10, the intermediate side surface 67 is located laterally outward of the upper side surface 66. The intermediate side surface 67 is located laterally outward of the lower side surface 68. FIG. 11 is a cross-sectional view taken along the line XI-XI in FIG. 4. As illustrated in FIG. 11, a lower portion 261 of the left side cover 26 has an inwardly recessed shape at a position behind the guide groove 39. The lower portion 261 of the left side cover 26 is located below the lower end 392 of the guide groove 39.

The left front side cover 23 has been described above. The right front side cover 24 has the same structure as the left front side cover 23 except that it is symmetrical with the left front side cover 23.

In the straddled vehicle 1 according to the present embodiment described above, water flows rearward along the outer cover 38 and flows from the outer cover 38 to the inner cover 37. The water that has flowed into the inner cover 37 is guided downward by the guide groove 39. As a result, it is possible to prevent the rider's legs from getting wet.

Although one embodiment of the present teaching has been described above, the said teaching is not limited to the above embodiment, and various modifications can be made without departing from the scope of the invention defined by the appended claims.

The structure of the straddled vehicle 1 is not limited to that of the above embodiment, and may be changed. For example, the number of front wheel is not limited to one, and may be more than one. The number of rear wheels is not limited to one, and may be more than one. The structure of the body frame 2 is not limited to that of the above embodiment, and may be changed. For example, the shape of the down frame 12, the lower frame 13, or the rear frame 14 may be changed.

The structures of the left and right front side covers 23 and 24 may be changed. For example, the shape or arrangement of the outer cover 38 may be changed. The shape or arrangement of the inner cover 37 may be changed. The shape or arrangement of the guide groove 39 may be changed.

### REFERENCE SIGNS LIST

3 : Steering device, 4 : Front wheel, 5 : Seat, 11 : Head pipe, 21 : Front center cover, 23 : Left front side cover, 26 : Left side cover, 25 : Left leg shield, 31 : Left footrest surface, 37 : Inner cover, 38 : Outer cover, 39 : Guide groove, 41 : Upper side edge, 42 : Lower side edge, 43 : Step, 53 : Lower rear edge, 54 : Upper rear edge, 66 : Upper side surface, 67 : Intermediate side surface, 68 : Lower side surface

## Claims

1. A straddled vehicle (1) comprising:
a head pipe (11);
a steering device (3) turnably supported by the head pipe (11);
a front wheel (4) rotatably supported by the steering device (3);
a front center cover (21) arranged in front of the head pipe (11) with regard to a vehicle front-rear direction and above the front wheel (4) with regard to a vehicle vertical direction, and on at least one of a left side and a right side of the vehicle comprises
a front side cover (23,24) that is connected to the front center cover (21) and overlaps with the steering device (3) as seen in a vehicle side view;
a seat (5) arranged behind the head pipe (11) with regard to the vehicle front-rear direction;
a rear side cover (26,27) arranged rearward of the front side cover (23,24) and that extends forward with regard to the vehicle front-rear direction and from below the seat (5) with regard to the vehicle vertical direction;
a leg shield (25) that extends laterally outward with regard to a vehicle width direction from the rear side cover (26,27); and
a footrest surface (31,32) connected to a lower portion (261) with regard to the vehicle vertical direction of the rear side cover (26,27) and arranged behind the leg shield (25) with regard to the vehicle front-rear direction, wherein
the leg shield (25) includes
an upper side edge (41) with regard to the vehicle vertical direction,
a lower side edge (42) located below, with regard to the vehicle vertical direction, and
laterally outward, with regard to a vehicle width direction, of the upper side edge (41), and
a step (43) located between the upper side edge (41) and the lower side edge (42),
the front side cover (23,24) includes an inner cover (37) and an outer cover (38) with regard to the vehicle width direction, and a guide groove (39),
the inner cover (37) is connected to the upper side edge (41) and extends forward from the upper side edge (41),
the outer cover (38) extends downward with regard to the vehicle vertical direction and rearward from the front center cover (21) as seen in the vehicle side view, and is arranged laterally outward of the inner cover (37) with regard to the vehicle width direction,
the outer cover (38) includes
a lower rear edge (53) with regard to the vehicle vertical direction connected to the lower side edge (42), and
an upper rear edge (54) that is located above the lower rear edge (53) with regard to the vehicle vertical direction and at least partially overlaps with the inner cover (37) as seen in the vehicle side view,
the guide groove (39) extends rearward with regard to the vehicle front-rear direction and downward with regard to the vehicle vertical direction and is connected to the step (43), and
the guide groove (39) closes between the outer cover (38) and the inner cover (37).

2. The straddled vehicle (1) according to claim 1, wherein the upper rear edge (54) has a shape that is recessed forward with regard to the vehicle front-rear direction.

3. The straddled vehicle (1) according to claim 2, wherein a portion of the inner cover (37) is located behind the upper rear edge (54) with regard to the vehicle front-rear direction.

4. The straddled vehicle (1) according to any one of claims 1 to 3, wherein the guide groove (39) closes between the outer cover (38) and the inner cover (37) at a position forward of the upper rear edge (54) with regard to the vehicle front-rear direction.

5. The straddled vehicle (1) according to any one of claims 1 to 4, wherein the outer cover (38) overlaps with the entire guide groove (39) as seen in the vehicle side view.

6. The straddled vehicle (1) according to any one of claims 1 to 5, wherein the rear side cover (26,27) has a shape that is recessed laterally inward with regard to the vehicle width direction at a position behind the guide groove (39) with regard to the vehicle front-rear direction.

7. The straddled vehicle (1) according to any one of claims 1 to 6, wherein an upper end (391) of the guide groove (39) is located above a lower end (501) of the seat (5) with regard to the vehicle vertical direction.

8. The straddled vehicle (1) according to any one of claims 1 to 7, wherein a lower end (392) of the guide groove (39) is located below the lower end (501) of the seat (5) with regard to the vehicle vertical direction.

9. The straddled vehicle (1) according to any one of claims 1 to 8, wherein the lower end (392) of the guide groove (39) is located below a top (401) of the front wheel (4) with regard to the vehicle vertical direction.

10. The straddled vehicle (1) according to any one of claims 1 to 9, wherein the outer cover (38) includes
an upper side surface (66) located above the upper end (391) of the guide groove (39) with regard to the vehicle vertical direction, and
an intermediate side surface (67) located below the upper end (391) of the guide groove (39) and above the lower end (392) of the guide groove (39) with regard to the vehicle vertical direction, and
as seen in a vehicle front view, the intermediate side surface (67) is located laterally outward of the upper side surface (66) with regard to the vehicle width direction.

11. The straddled vehicle (1) according to claim 10, wherein the outer cover (38) further includes a lower side surface (68) located below the lower end (392) of the guide groove (39) with regard to the vehicle vertical direction, and
as seen in the vehicle front view, the intermediate side surface (67) is located laterally outward of the lower side surface (68) with regard to the vehicle width direction.

12. The straddled vehicle (1) according to any one of claims 1 to 11, wherein the left side and the right side of the vehicle each includes
a front side cover as a left side cover (23) and a left side cover (24),
a rear side cover as a left rear side cover (26) and a right rear side cover (27),
a leg shield as a left leg shield (25) and right leg shield,
a footrest surface as a left footrest surface (31) and a right footrest surface (32).

## Patentansprüche

1. Ein Spreiz-Sitz-Fahrzeug (1), das umfasst:
ein Kopfrohr (11);
eine Lenkvorrichtung (3), die drehbar durch das Kopfrohr (11) gelagert ist;
ein Vorderrad (4), das drehbar durch die Lenkvorrichtung (3) gelagert ist;
eine vordere Mittelabdeckung (21), die vor dem Kopfrohr (11), in Bezug auf eine Fahrzeug-Vorder-Rück-Richtung, und über dem Vorderrad (4), in Bezug auf eine Fahrzeug-Vertikal-Richtung, angeordnet ist, und auf zumindest einer von einer linken und einer rechten Seite des Fahrzeugs umfasst
eine vordere Seitenabdeckung (23, 24), die mit der vorderen Mittelabdeckung (21) verbunden ist und die Lenkvorrichtung (3) überlappt, wenn in einer Seitenansicht des Fahrzeugs gesehen;
einen Sitz (5), der hinter dem Kopfrohr (11), in Bezug auf die Fahrzeug-Vorder-Rück-Richtung, angeordnet ist;
eine hintere Seitenabdeckung (26, 27), die hinter der vorderen Seitenabdeckung (23, 24) angeordnet ist und sich nach vorne, in Bezug auf die Fahrzeug-Vorder-Rück-Richtung, und von unterhalb des Sitzes (5), in Bezug auf die Fahrzeug-Vertikal-Richtung, erstreckt;
ein Beinschild (25), das sich seitlich nach außen erstreckt, in Bezug auf die Fahrzeug-Breiten-Richtung, von der hinteren Seitenabdeckung (26, 27); und
eine Fußablagefläche (31, 32), die mit einem unteren Abschnitt (261) der hinteren Seitenverkleidung (26, 27) in Bezug auf die Fahrzeug-Vertikal-Richtung verbunden und hinter dem Beinschild (25), in Bezug auf die Fahrzeug-Vorder-Rück-Richtung,
angeordnet ist, wobei
der Beinschild (25) enthält
eine obere Seitenkante (41) in Bezug auf die Fahrzeug-Vertikal-Richtung,
eine untere Seitenkante (42), die unterhalb der oberen Seitenkante (41), in Bezug auf die Fahrzeug-Vertikal-Richtung, und seitlich außerhalb, in Bezug auf die Fahrzeug-Breiten-Richtung, angeordnet ist, und
eine Stufe (43), die zwischen der oberen Seitenkante (41) und der unteren Seitenkante (42) angeordnet ist,
die vordere Seitenabdeckung (23, 24) beinhaltet eine innere Abdeckung (37) und eine äußere Abdeckung (38) in Bezug auf die Fahrzeug-Breiten-Richtung sowie eine Führungsnut (39),
die innere Abdeckung (37) ist mit der oberen Seitenkante (41) verbunden und erstreckt sich von der oberen Seitenkante (41) nach vorne,
die äußere Abdeckung (38) erstreckt sich nach unten, in Bezug auf die Fahrzeug-Vertikal-Richtung, und nach hinten von der vorderen mittleren Abdeckung (21), wenn in der Fahrzeug-Seiten-Ansicht gesehen, und ist seitlich außerhalb der inneren Abdeckung (37), in Bezug auf die Fahrzeug-Breiten-Richtung, angeordnet,
die äußere Abdeckung (38) enthält
eine untere Hinterkante (53) in Bezug auf die Fahrzeug-Vertikal-Richtung, die mit der unteren Seitenkante (42) verbunden ist, und
eine obere Hinterkante (54), die oberhalb der unteren Hinterkante (53), in Bezug auf die Fahrzeug-Vertikal-Richtung, angeordnet ist, und sich zumindest teilweise mit der inneren Abdeckung (37) überlappt, wenn in der Fahrzeug-Seiten-Ansicht gesehen,
die Führungsnut (39) erstreckt sich nach hinten, in Bezug auf die Fahrzeug-Vorder-Rück-Richtung, und nach unten, in Bezug auf die Fahrzeug-Vertikal-Richtung, und ist mit der Stufe (43) verbunden, und
die Führungsnut (39) schließt sich zwischen der äußeren Abdeckung (38) und der inneren Abdeckung (37).

2. Das Spreiz-Sitz-Fahrzeug (1) gemäß Anspruch 1, wobei die obere Hinterkante (54) eine nach vorne zurückgesetzte Form, in Bezug auf die Fahrzeug-Vorder-Rück-Richtung, aufweist.

3. Das Spreiz-Sitz-Fahrzeug (1) gemäß Anspruch 2, wobei sich ein Teil der inneren Abdeckung (37) hinter der oberen Hinterkante (54), in Bezug auf die Fahrzeug-Vorder-Rück-Richtung, angeordnet ist.

4. Das Spreiz-Sitz-Fahrzeug (1) gemäß irgendeinem der Ansprüche 1 bis 3, wobei die Führungsnut (39) zwischen der äußeren Abdeckung (38) und der inneren Abdeckung (37) an einer Position vor der oberen Hinterkante (54) in Bezug auf die Fahrzeug-Vorder-Rück-Richtung schließt.

5. Das Spreiz-Sitz-Fahrzeug (1) gemäß irgendeinem der Ansprüche 1 bis 4, wobei die äußere Abdeckung (38) die gesamte Führungsnut (39) überdeckt, wenn in der Fahrzeug-Seiten-Ansicht gesehen.

6. Das Spreiz-Sitz-Fahrzeug (1) gemäß irgendeinem der Ansprüche 1 bis 5, wobei die hintere Seitenabdeckung (26, 27) eine Form aufweist, die seitlich nach innen zurückgesetzt ist, in Bezug auf die Fahrzeug-Breiten-Richtung, an einer Stelle hinter der Führungsnut (39), in Bezug auf die Fahrzeug-Vorder-Rück-Richtung.

7. Das Spreiz-Sitz-Fahrzeug (1) gemäß irgendeinem der Ansprüche 1 bis 6, wobei ein oberes Ende (391) der Führungsnut (39) oberhalb eines unteren Endes (501) des Sitzes (5), in Bezug auf die Fahrzeug-Vertikal-Richtung, angeordnet ist.

8. Das Spreiz-Sitz-Fahrzeug (1) gemäß irgendeinem der Ansprüche 1 bis 7, wobei ein unteres Ende (392) der Führungsnut (39) unterhalb des unteren Endes (501) des Sitzes (5), in Bezug auf die Fahrzeug-Vertikal-Richtung, angeordnet ist.

9. Das Spreiz-Sitz-Fahrzeug (1) gemäß irgendeinem der Ansprüche 1 bis 8, wobei sich das untere Ende (392) der Führungsnut (39) unterhalb einer Oberseite (401) des Vorderrades (4), in Bezug auf die Fahrzeug-Vertikal-Richtung, angeordnet ist.

10. Das Spreiz-Sitz-Fahrzeug (1) gemäß irgendeinem der Ansprüche 1 bis 9, wobei die äußere Abdeckung (38) beinhaltet
eine obere Seitenfläche (66), die oberhalb des oberen Endes (391) der Führungsnut (39), in Bezug auf die Fahrzeug-Vertikal-Richtung, angeordnet ist, und
eine Zwischenseitenfläche (67), die unterhalb des oberen Endes (391) der Führungsnut (39) und oberhalb des unteren Endes (392) der Führungsnut (39), in Bezug auf die Fahrzeug-Vertikal-Richtung, angeordnet ist, und
wenn in einer Fahrzeug-Vorder-Ansicht gesehen, die Zwischenseitenfläche (67), seitlich außerhalb der oberen Seitenfläche (66), in Bezug auf die Fahrzeug-Breiten-Richtung, angeordnet ist.

11. Das Spreiz-Sitz-Fahrzeug (1) gemäß Anspruch 10, wobei die äußere Abdeckung (38) weiterhin eine untere Seitenfläche (68) beinhaltet, die unterhalb des unteren Endes (392) der Führungsnut (39), in Bezug auf die Fahrzeug-Vertikal-Richtung, angeordnet ist, und
wenn in der Fahrzeug-Vorder-Ansicht gesehen, die Zwischenseitenfläche (67) seitlich außerhalb der unteren Seitenfläche (68), in Bezug auf die Fahrzeug-Breiten-Richtung, angeordnet ist.

12. Das Spreiz-Sitz-Fahrzeug (1) gemäß irgendeinem der Ansprüche 1 bis 11, wobei die linke Seite und die rechte Seite des Fahrzeugs jeweils beinhalte eine vordere Seitenabdeckung als linke Seitenabdeckung (23) und eine linke Seitenabdeckung (24),
eine hintere Seitenabdeckung als eine linke hintere Seitenabdeckung (26) und eine rechten hintere Seitenabdeckung (27),
ein Beinschild als linkes Beinschild (25) und rechtes Beinschild,
eine Fußablagefläche als eine linke Fußablagefläche (31) und eine rechte Fußablagefläche (32).

## Revendications

1. Véhicule à enfourcher (1), comprenant :
un tube de tête (11) ;
un dispositif de direction (3) supporté de manière tournante par le tube de tête (11) ;
une roue avant (4) supportée de manière rotative par le dispositif de direction (3) ;
un carénage central avant (21) agencé en avant du tube de tête (11) par rapport à une direction avant-arrière du véhicule et au-dessus de la roue avant (4) par rapport à une direction verticale du véhicule, et au moins un côté parmi un côté gauche et un côté droit du véhicule comprend
un carénage latéral avant (23, 24) qui est connecté au carénage central avant (21) et chevauche le dispositif de direction (3) en vue latérale du véhicule ;
un siège (5) agencé en arrière du tube de tête (11) par rapport à la direction avant-arrière du véhicule ;
un carénage latéral arrière (26, 27) agencé en arrière du carénage latéral avant (23, 24) et qui s'étend vers l'avant par rapport à la direction avant-arrière du véhicule et depuis le dessous du siège (5) par rapport à la direction verticale du véhicule ;
un bouclier de jambe (25) qui s'étend latéralement vers l'extérieur par rapport à une direction de la largeur du véhicule depuis le carénage latéral arrière (26, 27) ; et
une surface de repose-pied (31, 32) connectée à une portion inférieure (261) par rapport à la direction verticale du véhicule du carénage latéral arrière (26, 27) et agencée en arrière du bouclier de jambe (25) par rapport à la direction avant-arrière du véhicule,
dans lequel
le bouclier de jambe (25) comprend
un bord latéral supérieur (41) par rapport à la direction verticale du véhicule,
un bord latéral inférieur (42) situé au-dessous, par rapport à la direction verticale du véhicule, et latéralement vers l'extérieur, par rapport à une direction de la largeur du véhicule, du bord latéral supérieur (41), et
un échelon (43) situé entre le bord latéral supérieur (41) et le bord latéral inférieur (42),
le carénage latéral avant (23, 24) comprend un carénage interne (37) et un carénage externe (38) par rapport à la direction de la largeur du véhicule, et une rainure de guidage (39),
le carénage interne (37) est connecté au bord latéral supérieur (41) et s'étend vers l'avant depuis le bord latéral supérieur (41),
le carénage externe (38) s'étend vers le bas par rapport à la direction verticale du véhicule et vers l'arrière depuis le carénage central avant (21) en vue latérale du véhicule, et est agencé latéralement vers l'extérieur du carénage interne (37) par rapport à la direction de la largeur du véhicule,
le carénage externe (38) comprend
un bord arrière inférieur (53) par rapport à la direction verticale du véhicule, connecté au bord latéral inférieur (42), et
un bord arrière supérieur (54) qui est situé au-dessus du bord arrière inférieur (53) par rapport à la direction verticale du véhicule et qui chevauche au moins partiellement le carénage interne (37) en vue latérale du véhicule,
la rainure de guidage (39) s'étend vers l'arrière par rapport à la direction avant-arrière du véhicule et vers le bas par rapport à la direction verticale du véhicule et est connectée à l'échelon (43), et
la rainure de guidage (39) se ferme entre le carénage externe (38) et le carénage interne (37).

2. Véhicule à enfourcher (1) selon la revendication 1, dans lequel le bord arrière supérieur (54) présente une forme qui est renfoncée vers l'avant par rapport à la direction avant-arrière du véhicule.

3. Véhicule à enfourcher (1) selon la revendication 2, dans lequel une portion du carénage interne (37) est située en arrière du bord arrière supérieur (54) par rapport à la direction avant-arrière du véhicule.

4. Véhicule à enfourcher (1) selon l'une quelconque des revendications 1 à 3, dans lequel la rainure de guidage (39) se ferme entre le carénage externe (38) et le carénage interne (37) à une position en avant du bord arrière supérieur (54) par rapport à la direction avant-arrière du véhicule.

5. Véhicule à enfourcher (1) selon l'une quelconque des revendications 1 à 4, dans lequel le carénage externe (38) chevauche l'entièreté de la rainure de guidage (39) en vue latérale du véhicule.

6. Véhicule à enfourcher (1) selon l'une quelconque des revendications 1 à 5, dans lequel le carénage latéral arrière (26, 27) présente une forme qui est renfoncée latéralement vers l'intérieur par rapport à la direction de la largeur du véhicule à une position située en arrière de la rainure de guidage (39) par rapport à la direction avant-arrière du véhicule.

7. Véhicule à enfourcher (1) selon l'une quelconque des revendications 1 à 6, dans lequel une extrémité supérieure (391) de la rainure de guidage (39) est située au-dessus d'une extrémité inférieure (501) du siège (5) par rapport à la direction verticale du véhicule.

8. Véhicule à enfourcher (1) selon l'une quelconque des revendications 1 à 7, dans lequel une extrémité inférieure (392) de la rainure de guidage (39) est située au-dessous de l'extrémité inférieure (501) du siège (5) par rapport à la direction verticale du véhicule.

9. Véhicule à enfourcher (1) selon l'une quelconque des revendications 1 à 8, dans lequel l'extrémité inférieure (392) de la rainure de guidage (39) est située au-dessous d'un sommet (401) de la roue avant (4) par rapport à la direction verticale du véhicule.

10. Véhicule à enfourcher (1) selon l'une quelconque des revendications 1 à 9, dans lequel le carénage externe (38) comprend
une surface latérale supérieure (66) située au-dessus de l'extrémité supérieure (391) de la rainure de guidage (39) par rapport à la direction verticale du véhicule, et
une surface latérale intermédiaire (67) située au-dessous de l'extrémité supérieure (391) de la rainure de guidage (39) et au-dessus de l'extrémité inférieure (392) de la rainure de guidage (39) par rapport à la direction verticale du véhicule, et
en vue de face du véhicule, la surface latérale intermédiaire (67) est située latéralement vers l'extérieur de la surface latérale supérieure (66) par rapport à la direction de la largeur du véhicule.

11. Véhicule à enfourcher (1) selon la revendication 10, dans lequel le carénage externe (38) comprend en outre une surface latérale inférieure (68) située au-dessous de l'extrémité inférieure (392) de la rainure de guidage (39) par rapport à la direction verticale du véhicule, et
en vue de face du véhicule, la surface latérale intermédiaire (67) est située latéralement vers l'extérieur de la surface latérale inférieure (68) par rapport à la direction de la largeur du véhicule.

12. Véhicule à enfourcher (1) selon l'une quelconque des revendications 1 à 11, dans lequel le côté gauche et le côté droit du véhicule comprennent chacun
un carénage latéral avant comme carénage latéral gauche (23) et carénage latéral droit (24),
un carénage latéral arrière comme carénage latéral arrière gauche (26) et carénage latéral arrière droit (27),
un bouclier de jambe comme bouclier de jambe gauche (25) et bouclier de jambe droit,
une surface de repose-pied comme surface de repose-pied gauche (31) et surface de repose-pied droit (32).
